# EUROPEAN PATENT SPECIFICATION

(11) **EP 4 407 782 B1**
(45) Date of publication and mention of the grant of the patent: **18.11.2026**
(21) Application number: 23726833.9
(22) Date of filing: 21.02.2023
(51) Int. Cl.: H01M 50/574, B60L 3/00, H01M 50/24, H01M 50/591, H01M 50/204, H01M 50/296, H01M 50/572, H01M 50/588

(54) **PROTECTIVE COVER, BATTERY DISCONNECT UNIT (BDU) BOX, BDU, AND BATTERY PACK BOX**
SCHUTZABDECKUNG, GEHÄUSE FÜR BATTERIETRENNEINHEIT (BDU), BDU UND BATTERIEPACKGEHÄUSE
COUVERCLE DE PROTECTION, BOÎTIER D'UNITÉ DE DÉCONNEXION DE BATTERIE (BDU), BDU ET BOÎTIER DE BLOC-BATTERIE

(30) Priority: 07.12.2022 CN 202211560478; 07.12.2022 CN 202223270001 U
(43) Date of publication of application: 31.07.2024
(60) Divisional application: 26207814.0 / 4 838 687
(73) Proprietor: Eve Power Co., Ltd., Jingmen, Hubei 448000 (CN)
(72) Inventor: WANG, Lei, Jingmen, Hubei 448000 (CN); LI, Yanyan, Jingmen, Hubei 448000 (CN)
(74) Representative: Herrero & Asociados, S.L.
(86) International application number: PCT/CN2023/077402
(87) International publication number: WO 2024/119623

(56) References cited:
- EP-A1- 3 490 028
- EP-A1- 3 972 046
- CN-A- 109 449 645
- CN-A- 113 395 861
- CN-U- 215 284 667
- CN-U- 215 453 561
- CN-U- 217 936 267
- CN-Y- 2 717 828
- KR-A- 20200 081 753

## Description

### TECHNICAL FIELD

The present disclosure relates to the field of power batteries, mechanical designs, and electronics, and in particular to a protective cover, a battery disconnect unit (BDU) case, a BDU, and a battery pack case.

### BACKGROUND

A battery pack case is a case configured to package a plurality of power battery modules. The plurality of power battery modules are packaged into the battery pack case to form a power battery pack. The power battery pack may be used in an electric vehicle, providing a driving force to drive the electric vehicle to move.

Generally, a battery disconnect unit (BDU) is packaged inside the pack case. The BDU is an internal functional unit specifically configured for the power battery pack, serving as a power distribution box for the power battery pack. When a system of the power battery pack reports an error, the BDU may cut off an internal current of the power battery pack to ensure safety of the system of the power battery pack.

Typically, the BDU includes a BDU case and an electrical assembly encapsulated inside the BDU case. Some of terminals of the electrical assembly need to be exposed out of the BDU case in order to allow the electrical assembly of the BDU to transmit signals with other functional components. Therefore, an avoidance opening needs to be defined in the BDU case. Condensation may be adhered to an inner top surface of the PACK case. When the BDU is encapsulated inside the PACK case, the condensation may drip downwards and pass through the avoidance opening to reach the exposed terminals, causing damage to the BDU or causing safety hazards.

The Chinese patent publication No. CN215453561U discloses a novel battery BDU structure which comprises a plastic upper cover and a plastic box body, a plurality of relays, a current sensor and a fuse are installed in a groove in the upper portion of the interior of the plastic box body, and wire harnesses are fixed at the interface positions of the relays, the current sensor and the fuse in the mode that screws penetrate through copper bars. The wire harness is connected to the connector on one side, a resistor and a relay are installed in a groove in the lower portion of the interior of the plastic box body, a plurality of connecting buckles with through grooves are arranged on the peripheral edge of the plastic upper cover, and detachable protective covers are arranged in concave areas of the upper surface of the plastic upper cover. The protective cover is clamped in the mounting groove of the plastic upper cover through a rotating clamping piece on the inner side, a concave base is arranged in the middle of the rotating clamping piece, and clamping columns are arranged on the two sides of the concave base. According to the structure scheme, the cost and development cost can be reduced, the assembly time is reduced, and the reliability of the BDU structure is improved.

### SUMMARY OF THE DISCLOSURE

The present disclosure provides a protective cover, a BDU case, a BDU, and a battery pack case as set out in the appended set of claims.

### BRIEF DESCRIPTION OF THE DRAWINGS

In order to illustrate technical solutions in embodiments of the present disclosure, the accompanying drawings used for describing the embodiments of the present disclosure will be described in the following. The following described drawings are only some of the embodiments of the present disclosure. Any ordinary skilled person in the art may obtain other drawings without any creative work based on the embodiments and the accompanying drawings of the present disclosure.
FIG. 1 is a structural schematic view of a protective cover, being viewed from a viewing angle, according to an embodiment of the present disclosure.
FIG. 2 is a structural schematic view of a protective cover, being viewed from another viewing angle, according to an embodiment of the present disclosure.
FIG. 3 is a perspective view I of a battery disconnect unit (BDU), being viewed from a viewing angle, according to an embodiment of the present disclosure.
FIG. 4 is an enlarged view of a portion A in FIG. 3.
FIG. 5 is a perspective view II of the battery disconnect unit (BDU) according to an embodiment of the present disclosure.
FIG. 6 is a schematic view of an electrical assembly being arranged in a base of a BDU according to an embodiment of the present disclosure.
FIG. 7 is a schematic view of a base of a BDU according to an embodiment of the present disclosure.
FIG. 8 is a perspective view I of a battery disconnect unit (BDU), being viewed from another viewing angle, according to an embodiment of the present disclosure.
FIG. 9 is a structural schematic view of a protective plate according to an embodiment of the present disclosure.
FIG. 10 is a structural schematic view of an upper cover of a BDU according to an embodiment of the present disclosure.
FIG. 11 is a structural schematic view of a pack case according to an embodiment of the present disclosure.
FIG. 12 is a schematic view of the structure shown in FIG. 11, being viewed from antoher viewing angle and having some components being omitted.
FIG. 13 is an enlarged view of a portion B in FIG. 12.

In the drawings:
10, body; 101, mounting cavity; 102, pack case connector; 103, insertion sheet; 104, bus bar; 201, BDU output pole;
11, water blocking member; 111, water blocking plate; 1111, water blocking flange; 11111, flange body; 11112, flange edge; 112, first engaging slot; 113, support body; 1131, limiting-and-abutting surface;
12, side protection member; 121, elastic engaging tab; 1211, second engaging slot; 1212, unlocking press position;
21, upper cover of BDU; 211, first notch; 212, fluid guiding groove; 213, engaging rib; 214, abutting rib; 215, second notch; 216, limit shaft; 217, U-shaped limiting block; 218, upper cover engaging slot; 219, fluid guiding gap;
22, BDU base; 221, accommodation cavity; 222, BDU base engaging block; 223, fixing member; 224, engaging hole; 225, base engaging protrusion;
23, protective plate; 231, elastic abutting arm; 232, curved limiting portion.

### DETAILED DESCRIPTION

In the description of the present disclosure, it shall be noted that an orientation or a positional relationship indicated by terms "center", "top", "bottom", "left" , "right", "vertical", "horizontal", "inside", "outside", and so on are based on an orientation or a positional relationship shown in the accompanying drawings and are only used to facilitate the description of the present disclosure and to simplify the description. The terms do not indicate or imply that a device or an element referred to must have a particular orientation, or must be constructed or operate in a particular orientation. Furthermore, the terms "first" and "second" are used for descriptive purposes only and shall not be interpreted as indicating or implying relative importance. In particular, the terms "first position" and "second position" refer to two different positions.

In the description of the present disclosure, to be noted that, unless otherwise expressly specified and limited, the terms "mounted", "connected", "coupled" shall be understood broadly. For example, two elements may be fixedly or detachably connected with each other; mechanically or electrically connected with each other; directly or indirectly connected with each other through an intermediate medium; having internal components being connected with each other. Any ordinary skilled person in the art shall understand the above terms in the context of the present disclosure as appropriate.

### Embodiment I

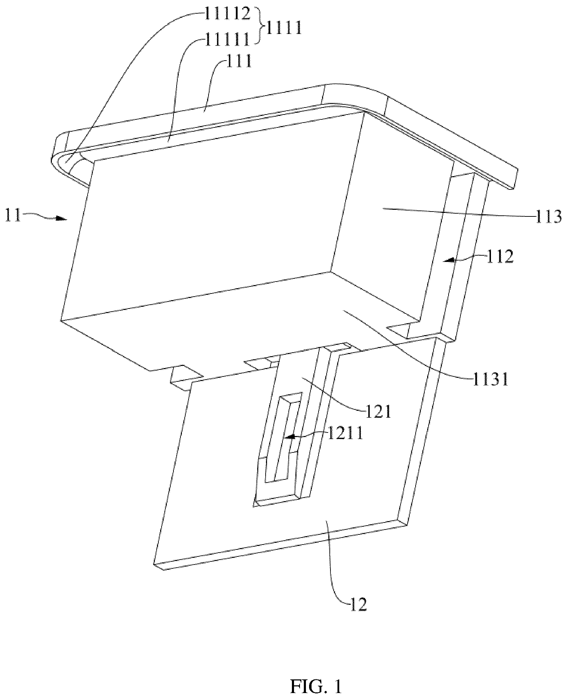

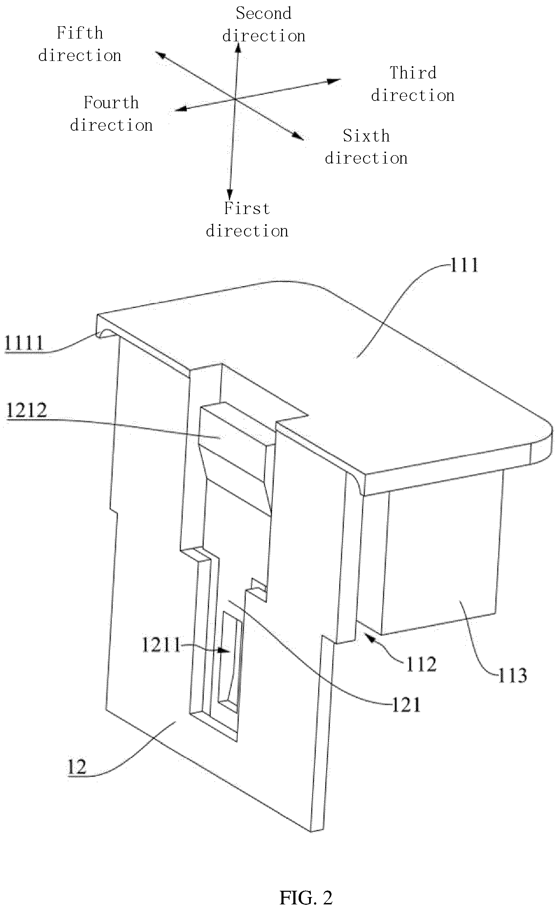

As shown in FIG. 1 and FIG. 2, the present embodiment provides a protective cover. The protective cover is applied to a battery disconnect unit (BDU) case and is configured to protect a terminal or a fuse, which are exposed out of the BDU case, from water and dust.

In an embodiment, the protective cover is an integral and one-piece structure, such that a structural strength of the protective cover is ensured. The protective cover is injection moulded into the one-piece structure.

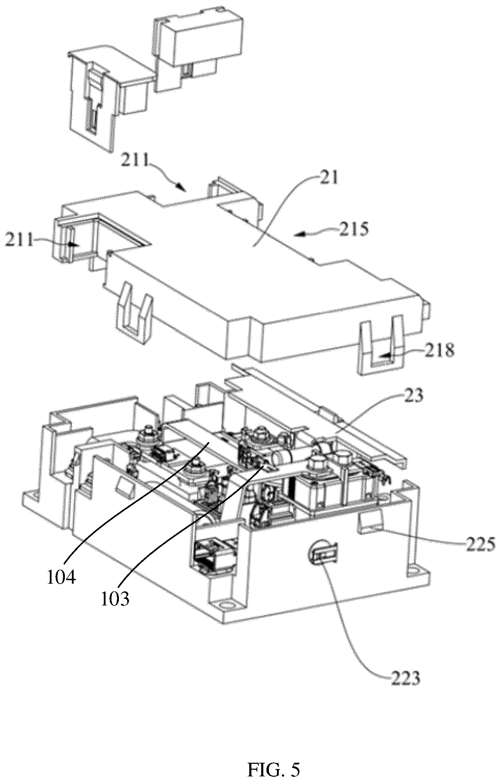

As shown in FIG. 5, an upper cover 21 of the BDU defines a first notch 211 to allow the terminal, which is arranged inside the BDU case and needs to be exposed, to be exposed.

In the present embodiment, the protective cover includes a water blocking member 11 and a side protection member 12. As shown in FIG. 1, the water blocking member 11 includes a water blocking plate 111. The water blocking plate 111 is arranged a water blocking flange 1111. The water blocking flange 1111 is configured to be engaged with the upper cover 21 of the BDU, allowing the water blocking plate 111 seals an upper opening of the first notch 211 of the upper cover 21 of the BDU. The side protection member 12 is arranged on a side of the water blocking member 11. The side blocking member 12 is configured to be snap-fit with a base 22 of the BDU and may cover a part of a side opening of the first notch 211.

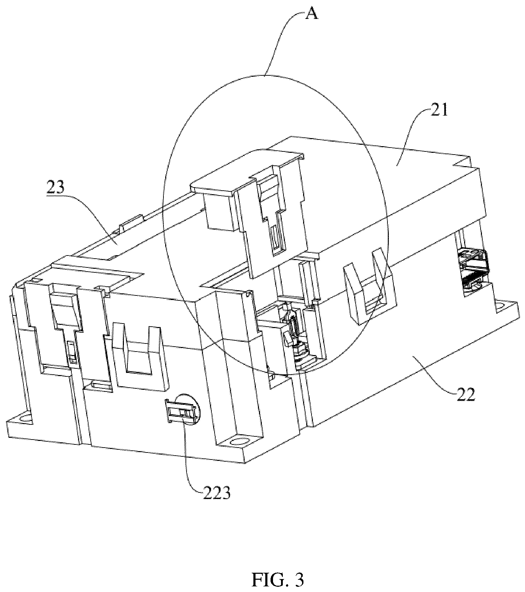

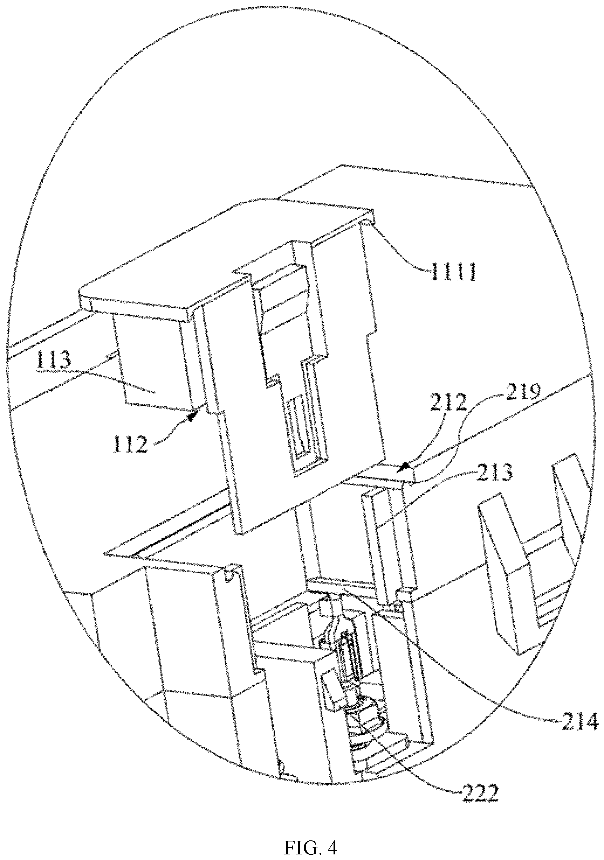

As shown in FIG. 3 and FIG. 4, when the protective cover is arranged on the BDU case, the protective cover may be snap-fit with both the upper cover 21 of the BDU and the base 22 of the BUD to protect the exposed terminal or the exposed fuse on the BDU case from water and dust.

According to the present embodiment, when the protective cover is in use, the water blocking flange 1111 of the water blocking plate 111 is snap-fit with the upper cover 21 of the BDU, allowing the water blocking plate 111 to seal the upper opening of the first notch 211 of the upper cover 21 of the BUD, protecting the exposed terminals and the exposed fuses on the BDU case from water and dust. When the BDU case is arranged inside a battery pack case, condensation generated on an inner top surface of a pack case may not drip down from the upper opening of the first notch 211 into the first notch 211, and therefore, the condensation may not reach the exposed terminal or the exposed fuse on the BDU case. In this way, electrical safety and a service life of the BDU may be ensured. The side protection member 12 is snap fit with the base 22 of the BDU to cover a part of the side opening of the first notch 211. In this way, the protective cover and the BDU case may cooperatively form a dust-proof space, protecting the exposed terminal or the exposed fuse on the BDU case from dust.

It shall be understood that the side protection member 12 covers a part of the side opening, but not the entire side opening, of the first notch 211. This is because a space needs to be defined to allow an external wire to pass through. The external wire may be connected to the exposed terminal on the BDU case via an uncovered part of the side opening of the first notch 211.

In an embodiment, the protective cover may be snap-fit with both the upper cover 21 of the BDU and the base 22 of the BDU, such that the upper cover 21 of the BDU and the base 22 of the BDU are connected, and positions of the upper cover 21 of the BDU and the base 22 of the BDU may be limited. When the protective cover is arranged on the BDU case appropriately, the external wire may be connected to the exposed terminal on the BDU case via a lower side of the side protection member 12.

According to the claimed invention, the water blocking member 11 includes a support body 113. The water blocking plate 111 is arranged on the support body 113. An edge of the water blocking plate 111 protrudes out of a side of the support body 113, serving as the water blocking flange 1111.

As shown in FIG. 1 and FIG. 2, three consecutive edges of the water blocking plate 111 protrude out of the side of the support body 113 to serve as the water blocking flange 1111. The support body 113 is arranged to enhance structural strength of the protective cover.

According to the claimed invention, the water blocking flange 1111 includes a flange body 11111 and a flange edge 11112. The flange body 11111 protrudes from the side of the support body 113. An angle is formed between the flange edge 11112 and the flange body 11111. The flange edge 11112 may abut against the upper cover 21 of the BDU.

By arranging the flange edge 11112, the flange edge 11112 may abut against the upper cover 21 of the BDU to ensure that the water blocking plate 111 completely seals the first notch 211 of the upper cover 21 of the BDU, preventing any gap from being defined between the flange edge 11112 and the upper cover 21 of the BDU, such that the condensation dripping onto the water blocking plate 111 may be prevented from flowing into the first notch 211 from the gap.

In an embodiment, the support body 113 defines a first engaging slot 112 or is arranged with an engaging rib 213. The first engaging slot 112 or the engaging rib 213 is configured to be snap-fit with the upper cover 21 of the BDU. In this way, the protective cover may be mounted on the upper cover 21 of the BDU stably, ensuring that the flange edge 11112 is always abutting against the upper cover 21 of the BDU.

In the present embodiment, the support body 113 defines the first engaging slot 112. The first engaging slot 112 is configured to be snap-fit with the upper cover 21 of the BDU. Correspondingly, the upper cover 21 of the BDU is arranged with the engaging rib 213. The engaging rib 213 is snap-fit with the first engaging slot 112. Each of the first engaging slot 112 and the engaging rib 213 has an extending length in a first direction or in a second direction. When the engaging rib 213 is snap-fit with the first engaging slot 112, the first engaging slot 112 limits movement of the engaging rib 213 in a third direction and in a fourth direction.

After the protective cover is arranged appropriately, the upper cover 21 of the BDU is snap-fit with the first engaging slot 112, preventing the support body 113 from shifting. In this way, the flange edge 11112 is always abutting against the upper cover 21 of the BDU.

In an embodiment, the first engaging slot 112 is defined in each of two opposite sides of the support body 113 along a fifth direction or a sixth direction.

As shown in FIG. 2 and FIG. 3, in the present embodiment, when the first engaging slot 112 on a side of the support body 113 is snap-fit with the upper cover 21 of the BDU, the first engaging slot 112 may limit movement of the support body 113 along the third direction and the fourth direction. The third direction is facing opposite to the fourth direction.

When the first engaging slot 112 on each of two sides of the support body 113 is snap-fit with the upper cover 21 of the BDU, the first engaging slot 112 on each of two sides of the support body 113 may limit movement of the support body 113 along the fifth direction and the sixth direction. The fifth direction is facing opposite to the sixth direction. The fifth direction is perpendicular to the third direction.

In an embodiment, the support body 113 is arranged with a limiting-and-abutting surface 1131. The limiting-and-abutting surface 1131 abuts against the upper cover 21 of the BDU to limit movement of the support body 113 in the first direction, ensuring the support body 113 to be mounted in place accurately. Any two of the first direction, the third direction, and the fifth direction are perpendicular to each other.

In the present embodiment, the side protection member 12 is snap-fit with the base 22 of the BDU to limit movement of the protective cover in the second direction. The second direction is opposite to the first direction.

By limiting movement of the support body 113 in the first direction, the second direction, the third direction, the fourth direction, the fifth direction and the sixth direction, the protective cover may be ensured to be mounted in place accurately, and abutting and airtightness of the protective cover can be achieved.

In an embodiment, the side protection member 12 is arranged with an elastic engaging tab 121. The elastic engaging tab 121 defines a second engaging slot 1211. The second engaging slot 1211 is snap-fit with the base 22 of the BDU.

To be noted that, in order to allow the base 22 of the BDU from being released from the second engaging slot 1211 after the snap fitting, in the present embodiment, the elastic engaging tab 121 is further arranged with an unlocking press position 1212. The unlocking press position 1212 is configured to, after being pressed, allow the elastic engaging tab 121 to rotate relative to the side protection member 12 to allow the base 22 of the BDU to be released from the second engaging slot 1211. The second engaging slot 1211 and the unlocking press position 1212 are located at two ends of the elastic engaging tab 121 respectively.

When the base 22 of the BDU needs to be released from the second engaging slot 1211, the unlocking press position 1212 may be pressed, and the elastic engaging tab 121 may rotate relative to the side protection member 12. In this way, an end of the elastic engaging tab 121 arranged with the second engaging slot 1211 is tilted upwardly relative to the base 22 of the BDU, and the second engaging slot 1211 and the base 22 of the BDU are released from each other.

### Embodiment II

As shown in FIG. 3 to FIG. 9, the present embodiment provides a BDU case including the protective cover of the Embodiment I.

The BDU case includes the base 22 of the BDU and upper cover 21 of the BDU. The base 22 of the BDU defines an accommodation cavity 221. The upper cover 21 of the BDU may cover an opening of the accommodation cavity 221. The upper cover 21 of the BDU defines the first notch 211. The first notch 211 is communicated with the accommodation cavity 22, and a part of the opening of the accommodation cavity 221 may be exposed from the first notch 211. In this way, when the accommodation cavity 221 receives an electrical assembly, some terminals of the electrical assembly can be exposed.

As shown in FIG. 5, the base 22 of the BDU and the upper cover 21 of the BDU are capped with each other by snap fitting. The upper cover 21 of the BDU defines an upper cover engaging slot 218, and the base 22 of the BDU is arranged with a base engaging protrusion 225. In this way, snap fitting between the base 22 of the BDU and the upper cover 21 of the BDU may be achieved.

It shall be understood that when the electrical assembly is received in the accommodation cavity 221, some of terminals of the electrical assembly protrude out of the accommodation cavity 221. The upper cover 21 of the BDU covers the accommodation cavity 221 to seal the upper opening of the accommodation cavity 221. In addition, the first notch 211 allows the terminals that protrude out of the accommodation cavity 221 to pass through, allowing the terminals to be exposed to be connected to other wires.

The water blocking member 11 of the protective cover is fitted to the first notch 211, and the water blocking flange 1111 may be snap-fit with the upper cover 21 of the BDU, such that the water blocking plate 111 seals the upper opening of the first notch 211 of the upper cover 21 of the BDU. The side protection member 12 of the protective cover may be snap-fit with the base 22 of the BDU and may cover a part of the side opening of the first notch 211.

The protective cover protects the terminals, which are of the electrical assembly received inside the accommodation cavity 221 but protrudes out of the accommodation cavity 221, from water and dust.

As shown in FIG. 1 to FIG. 4, the water blocking member 11 includes the support body 113. The water blocking plate 111 is arranged on the support body 113. The edge of the water blocking plate 111 protrudes out of the side of the support body 113 to serve as the water blocking flange 1111. In the present embodiment, three successive edges of the water blocking plate 111 protrude out of the support body 113 to serve as the water blocking flange 1111.

In an embodiment, a fluid guiding groove 212 is defined in the upper cover 21 of the BDU along a circumferential direction of the first notch 211. The water blocking flange 1111 may be snap-fit with the fluid guiding groove 212. A fluid guiding gap 219 may be defined between the water blocking flange 1111 and a side wall of the fluid guiding groove 212 away from the first notch 211.

The water blocking flange 1111 includes the flange body 1111 and the flange edge 11112. The flange body 1111 protrudes out of the support body 113. An angle is formed between the flange edge 11112 and the flange body 1111. The flange edge 11112 may abut against the upper cover 21 of the BDU.

As shown in FIG. 4, the fluid guiding groove 212 may be U-shaped. Accordingly, the water blocking flange 1111 may be U-shaped. According to the claimed invention, a surface of the flange edge 11112 facing the support body 113 is curved and concaved. A side wall of the fluid guiding groove 212 near the first notch 211 may be curved and convex. When the protective cover is mounted in place, the curved and concaved surface abuts against and curved and convex surface to avoid any water penetration gap being defined there between. The fluid guiding gap 219 is defined between a surface of the flange edge 11112 away from the support body 113 and the side wall of the fluid guiding groove 212 away from the first notch 211.

When the BDU case is arranged inside the pack case, and when the condensation generated on the inner top surface of the pack case drips onto an upper surface of the upper cover 21 of the BDU or onto an upper surface of the water blocking plate 111, the dripped condensation flows into the fluid guiding gap 219 and is discharged from an outlet of the fluid guiding gap 219. The condensation flowing out of the outlet of the fluid guiding gap 219 may flow along a side wall of the upper cover 21 of the BDU to reach a side wall of the base 22 of the BDU.

As shown in FIG. 4, in an embodiment, the support body 113 defines the first engaging slot 112, and the upper cover 21 of the BDU is arranged with the engaging rib 213 that is snap-fit with the first engaging slot 112. When the protective cover is mounted in place by moving from top to bottom, the engaging rib 213 is snap-fit with the first engaging slot 112. The engagement limits movement of the protective cover in the third direction and the fourth direction. The third direction is opposite to the fourth direction.

In an embodiment, each of two opposite sides (in the fifth direction and the sixth direction) of the support body 113 defines the first engaging slot 112. The engaging rib 213 on the upper cover 21 of the BDU and the first engaging slot 112 are in one-to-one correspondence with each other. In this way, movement of the protective cover along the fifth direction and the sixth direction may be limited. The fifth direction is opposite to the sixth direction. Each of the fifth direction and the sixth direction is perpendicular to the third direction or the fourth direction.

In an embodiment, the support body 113 is arranged with the limiting-and-abutting surface 1131. The upper cover 21 of the BDU is arranged with the abutting rib 214. The abutting rib 214 is perpendicular to the engaging rib 213. The limiting-and-abutting surface 1131 is abutting against the abutting rib 214 to limit movement of the protective cover in the first direction.

Taking directions shown in FIG. 4 as an example, the water blocking plate 111 is arranged on the upper surface of the support body 113, and a lower surface of the support body 113 is the limiting-and-abutting surface 1131. Each of a left side and a right side of the support body 113 defines the first engaging slot 112. Each of a left inner wall of the first notch 211 and a right inner wall of the first notch 211 is arranged with the engaging rib 213, and the engaging rib 213 protrudes out of the left inner wall and the right inner wall and extends vertically (extending along the first direction or the second direction). Further, each of the left inner wall of the first notch 211 and the right inner wall of the first notch 211 is arranged with the abutting rib 214 that extends horizontally (extending along the third direction or the fourth direction).

In an embodiment, the side protection member 12 of the protective cover is provided with the elastic engaging tab 121. One of the elastic engaging tab 121 and the base 22 of the BDU defines a second engaging slot 1211, and the other one is arranged with a BDU base engaging block 222. The BDU base engaging block 222 is snap-fit with the second engaging slot 1211 to limit movement of the protective cover in the second direction.

In the present embodiment, the elastic engaging tab 121 defines the second engaging slot 1211, and the base 22 of the BDU is arranged with the BDU base engaging block 222 that can be snap-fit with the second engaging slot 1211. When the protective cover is mounted in place, the BDU base engaging block 222 abuts against a wall of the second engaging slot 1211 to limit movement of the protective cover in the second direction.

In order to facilitate the BDU base engaging block 222 to be released from the second engaging slot 1211, the elastic engaging tab 121 is further arranged with the unlocking press position 1212. When the unlocking press position 1212 is pressed, the elastic engaging tab 121 may rotate relative to the side protection member 12. The second engaging slot 1211 and the unlocking press position 1212 are located at two ends of the elastic engaging tab 121 respectively. When the BDU base engaging block 222 needs to be released from the second engaging slot 1211, the unlocking press position 1212 is pressed, and the elastic engaging tab 121 may rotate relative to the side protection member 12. In this way, an end of the elastic engaging tab 121 defining the second engaging slot 1211 is tilted upwards relative to the base 22 of the BDU, and the second engaging slot 1211 is then released from the BDU base engaging block 222.

A process of mounting the protective cover is as follows.

In the vertical direction, the protective cover is moved down to allow the first engaging slot 112 to be aligned with the engaging rib 213. As the protective cover is moving down, the first engaging slot 112 is snap-fit with the engaging rib 213 in one-to-one correspondence. The limiting-and-abutting surface 1131 abuts against the upper surface of the engaging rib 214. At this moment, the flange edge 11112 is received in the fluid guiding slot 212 and abuts against the wall of the fluid guiding slot 212, and the second engaging slot 1211 is snap-fit with the BDU base engaging block 222.

In an embodiment, the side protection member 12 is plate structured. In this way, when the protective cover is being mounted, the second engaging slot 1211 may be snap-fit with the BDU base engaging block 222 easily.

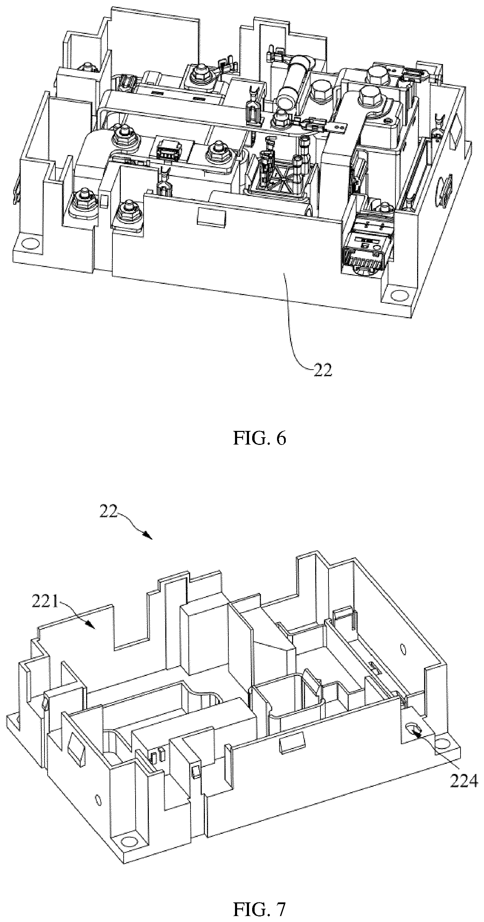

As shown in FIG. 5 and FIG. 6, the elastic engaging tab 121 is movably received in a hole defined in the side protection member 12. When the unlocking press position 1212 is pressed, the elastic engaging tab 121 may rotate in the hole by taking the unlocking press position 1212 as a rotating center, such that the BDU base engaging block 222 may be released from the second engaging slot 1211.

When the electrical assembly is received inside the accommodation cavity 221, a plurality of terminals of the electrical assembly need to be exposed. For example, the upper cover 21 of the BDU defines two first notches 211, terminals that are exposed from the two first notches 211 are a battery charging terminal and a fast-charging terminal respectively. Two protective covers are arranged to cover the two first notches 211 respectively to protect the exposed terminals.

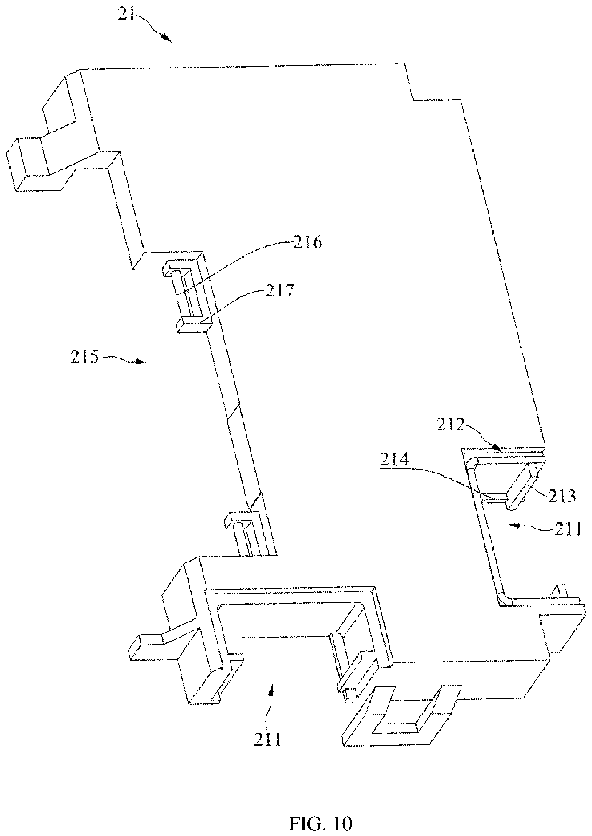

As shown in FIG. 5 to FIG. 10, the electrical assembly is further provided with a terminal connected to a pack end. In order to allow the terminal connected to the pack end to be exposed, in the present embodiment, the upper cover 21 of the BDU defines the second notch 215. A size of the second notch 215 is larger than a size of the first notch 211. In order to protect the terminal of the electrical assembly that is connected to the pack end from water, in an embodiment, the BDU case further includes a protective plate 23. The upper cover 21 of the BDU defines the second notch 215. The protective plate 23 is located at the second notch 215. The protective plate 23 is connected to both the base 22 of the BDU and the upper cover 21 of the BDU to protect the terminals exposed from the second notch 215.

In an embodiment, the protective plate 23 is arranged with an elastic abutting arm 231. The elastic abutting arm 231 elastically abuts against the base 22 of the BDU.

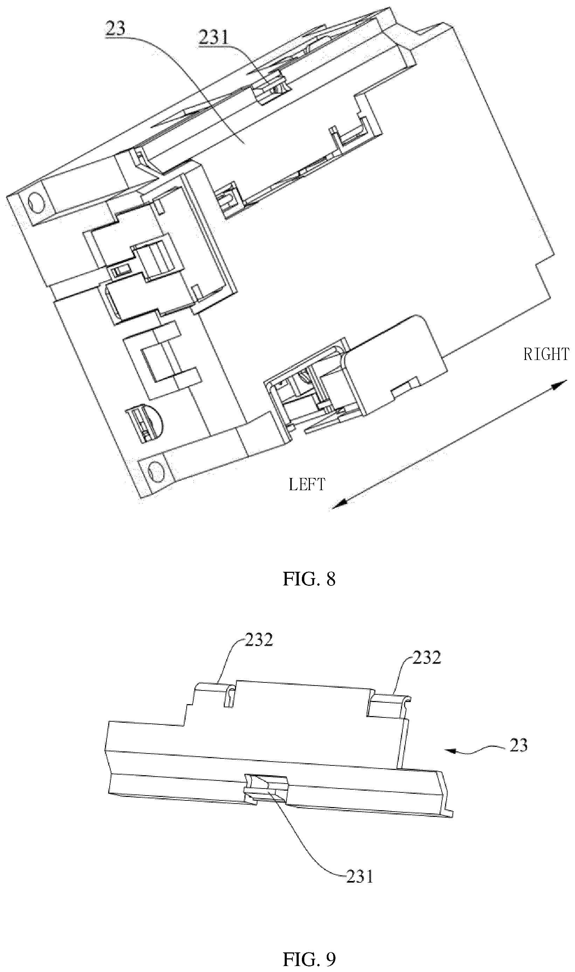

As shown in FIG. 8 to FIG. 10, elastic abutting arm 231 is a U-shaped structure having an opening facing upwardly. The protective plate 23 is arranged with a curved limit portion 232. The curved limit portion 232 defines a curved limit slot. The upper cover 21 of BDU is arranged with a limit shaft 216, which is snap-fit with the curved limit slot in one-to-one correspondence. In order to limit movement of the protective plate 23, after being mounted into the second notch 215, in the left-right direction, the upper cover 21 of the BDU is arranged with a U-shaped limiting block 217. The U-shaped limiting block 217 includes a first portion. Each of two ends of the first portion is arranged with a second portion extending vertically. Each of two ends of the limit shaft 216 is correspondingly connected to the second portion. After the curved limit slot is snap-fit with the limit shaft 216, an end of the curved limit portion 232 is disposed in a space between the limit shaft 216 and the first portion. In addition, each of two sides of the curved limit portion 232 may correspondingly abut against the second portion.

Taking the orientation shown in FIG. 8 as an example, after the curved limit portion 232, the U-shaped limiting block 217, and the limit shaft 216 are mounted in place, movement of the protective plate 23 in the left-right direction may be limited.

The elastic abutting arm 231 elastically abuts against the base 22 of the BDU, and the curved limit portion 232 may abut against the first portion, such that movement of the protective plate 23 in the front-rear direction may be limited. It shall be understood that the front-rear direction and the left-right direction are on a same plane and are perpendicular to each other.

In an embodiment, an outer side of the base 22 of the BDU is arranged with a fixing member 223. The fixing member 223 may be snap-fit with and secure an external high voltage wire interlocking connector.

As shown in FIG. 3 and FIG. 5, the fixing member 223 includes a fixing slot. A buckle of the high voltage wire interlocking connector may be snap-fit into fixing slot. In this way, the pack case does not need to be arranged with a bracket to support the high voltage wire interlocking connector.

As shown in FIG. 7 and FIG. 8, in an embodiment, the base 22 of the BDU defines an engaging hole 224. The engaging hole 224 is disposed out of the accommodation cavity 221, facilitating connection between the external wire and the high voltage wire interlocking connector. The engaging hole 224 is an elongated-circular hole, allowing a buckle of a socket of the high voltage wire interlocking connector to be quickly snap-fit into the elongated-circular hole.

### Embodiment III

As shown in FIG. 3 to FIG. 10, the present embodiment provides a BDU. The BDU includes the BDU case of the Embodiment II. The electrical assembly is arranged inside the accommodation cavity 221 of the BDU case.

In the present embodiment, the electrical assembly does not include a negative relay. A direction of an interface of a positive relay is perpendicular to a direction of an interface of a fast-charging relay, facilitating configuration of an external bus bar 104. Further, when the BDU is applied to the entire vehicle, an impact to the vehicle from various directions may be considered.

As shown in FIG. 5, the electrical assembly is arranged with a plurality of voltage sampling points. An insertion sheet 103 is arranged at each of the plurality of voltage sampling points. At the voltage sampling point, the bus bar 104 is connected the insertion sheet 103 in a rivet-pressing manner. A fast-charging terminal may be arranged at a harness end of an acquisition signal line to achieve fast insertion. Therefore, production efficiency may be improved.

In an embodiment, the acquisition signal line is ultrasonically welded to the bus bar 104, ensuring a transferring efficiency of the acquisition harness.

### Embodiment IV: battery pack case

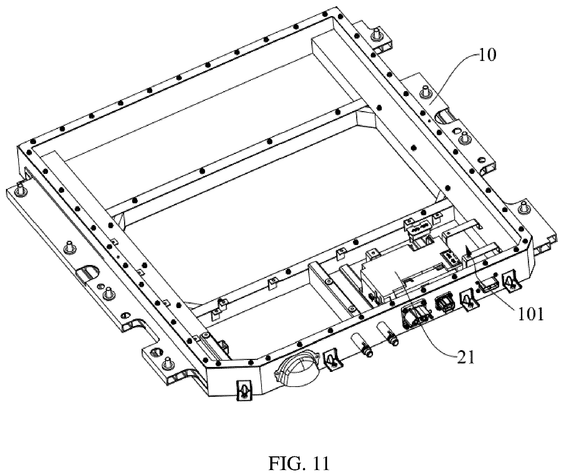

As shown in FIG. 11 to FIG. 13, the present embodiment provides a battery pack case including the BDU of the Embodiment III.

The battery pack case includes a body 10 and the BDU of Embodiment III. The body 10 defines a mounting cavity 101. The BDU is received in the mounting cavity 101. The body 10 is configured to mount the battery module. The base 22 of the BDU is mounted and fixed in the mounting cavity 101 by a connector.

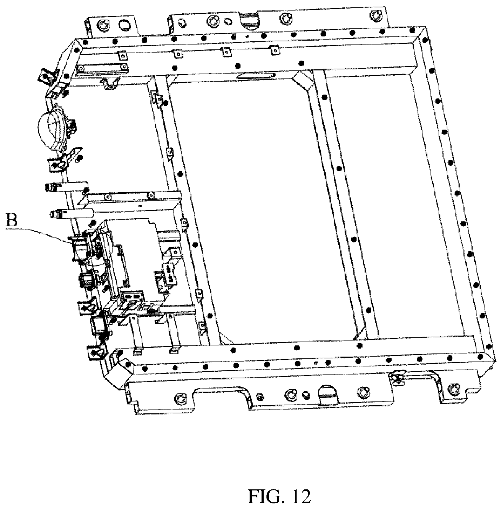

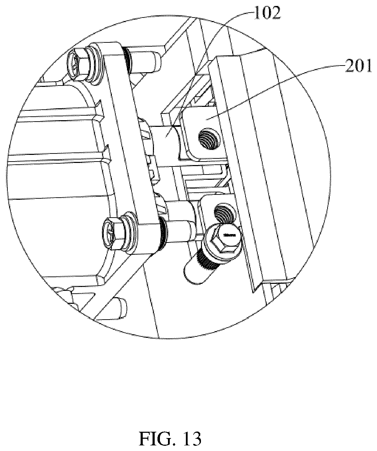

As shown in FIG. 12 and FIG. 13, in the present embodiment, the BDU has a BDU output pole 201. The pack case has a pack case connector 102. The BDU output pole 201 is threaded to the pack case connector 102. In this way, the bus bar 104 between the BDU output pole 201 and the pack case connector 102 may be omitted.

In an embodiment, the battery pack case is arranged with a pack slow-charging port and a pack fast-charging port. The electrical assembly of the BDU is connected to both the pack slow-charging port and the pack fast-charging port.

## Claims

1. A protective cover, comprising:
a water blocking member (11), wherein the water blocking member (11) comprises a water blocking plate (111), the water blocking plate (111) is arranged with a water blocking flange (1111), the water blocking flange (1111) is configured to be snap-fitted with an upper cover (21) of a battery disconnect unit, BDU, allowing the water blocking plate (111) to seal an upper opening of a first notch (211) of the upper cover (21) of the BDU;
a side protection member (12), disposed on a side of the water blocking member (11) and configured to be snap-fitted with a base (22) of the BDU and to cover a part of a side opening of the first notch (211);
wherein the protective cover is **characterized in that**,
the water blocking member (11) further comprises a support body (113), the water blocking plate (111) is arranged on the support body (113), the water blocking flange (1111) comprises a flange body (11111) and a flange edge (11112), the flange body (11111) protrudes out of the support body (113), a surface of the flange edge (11112) facing the support body (113) is curved and concaved; an edge of the water blocking plate (111) protrudes out of a side of the support body (113) to form the water blocking flange (1111).

2. The protective cover according to claim 1, an angle is formed between the flange edge (11112) and the flange body (11111), and the flange edge (11112) is configured to abut against the upper cover (21) of the BDU.

3. The protective cover according to claim 1, wherein the support body (113) defines a first engaging slot (112) or is arranged with an engaging rib (213), and the first engaging slot (112) or the engaging rib (213) is configured to be snap-fitted with the upper cover (21) of the BDU; and
the support body (113) is arranged with a limiting-and-abutting surface (1131), the limiting-and-abutting surface (1131) is configured to abut against the upper cover (21) of the BDU to limit movement of the support body (113) in a first direction.

4. The protective cover according to claim 1, wherein the side protection member (12) is arranged with an elastic engaging tab (121), the elastic engaging tab (121) defines a second engaging slot (1211); and
the elastic engaging tab (121) is further arranged with an unlocking press position (1212), the unlocking press position (1212) is configured to allow, when being pressed, the elastic engaging tab (121) to rotate relative to the side protection member (12).

5. A battery disconnect unit, BDU, case, comprising: the base (22), the upper cover (21), and the protective cover as claimed in any one of claims 1-4;
wherein the base (22) of the BDU defines a receiving cavity (221);
the upper cover (21) of the BDU is configured to cover an opening of the receiving cavity (221), the upper cover (21) of the BDU is arranged with the first notch (211) communicating with the receiving cavity (221) and exposing a part of the opening of the receiving cavity (221); and
the water blocking member (11) of the protective cover is disposed at the first notch (211), the water blocking flange (1111) is configured to be snap-fitted with the upper cover (21) of the BDU, and the side protection member (12) of the protective cover is configured to be snap-fitted with the base (22) of the BDU.

6. The BDU case according to claim 5, wherein a fluid guiding groove (212) is defined in the upper cover (21) of the BDU along a circumference of the first notch (211), the water blocking flange (1111) is configured to be snap-fitted in the fluid guiding groove (212), and a fluid guiding gap (219) is defined between the water blocking flange (1111) and a wall of the fluid guiding groove (212) away from the first notch (211).

7. The BDU case according to claim 6, wherein one of the support body (113) of the protective cover and the upper cover (21) of the BDU defines a first engaging slot (112), and the other of the support body (113) of the protective cover and the upper cover (21) of the BDU is arranged with an engaging rib (213) that is snap-fitted with the first engaging slot (112);
snap-fitting between the first engaging slot (112) and the engaging rib (213) is configured to limit movement of the protective cover in a third direction and in a fourth direction, the third direction is opposite to the fourth direction.

8. The BDU case according to claim 7, wherein the first engaging slot (112) is defined in each of two sides of the support body (113) along a fifth direction or a sixth direction, the engaging rib (213) on the upper cover (21) of the BDU is in one-to-one correspondence with the first engaging slot (112), snap-fitting between the engaging rib (213) and the first engaging slot (112) is configured to limit movement of the protective cover in the fifth direction and in the sixth direction, the fifth direction is opposite to the sixth direction, and each of the fifth direction and the sixth direction is perpendicular to the third direction or the fourth direction.

9. The BDU case according to claim 8, wherein the support body (113) is arranged with a limiting-and-abutting surface (1131), the upper cover (21) of the BDU is arranged with an abutting rib (214), the abutting rib (214) is perpendicular to the engaging rib (213), the limiting-and-abutting surface (1131) abuts against the engaging rib (214) to limit movement of the protective cover in the first direction.

10. The BDU case according to claim 5, wherein the side protection member (12) is arranged with an elastic engaging tab (121); one of the elastic engaging tab (121) and the base (22) of the BDU defines a second engaging slot (1211), and the other one of the elastic engaging tab (121) and the base (22) of the BDU is arranged with a BDU base engaging block (222); the second engaging slot (1211) is snap-fitted with the BDU base engaging block (222) to limit movement of protective cover in the second direction.

11. The BDU case according to claim 5, wherein a fixing member (223) is arranged on an outer side of the base (22) of the BDU, the fixing member (223) is configured to fix a high voltage wire interlocking connector arranged outside the base (22).

12. The BDU case according to any one of claims 5-11, further comprising a protective plate (23), wherein the upper cover (21) of the BDU defines a second notch (215), the protective plate (23) is disposed within the second notch (215), the protective plate (23) is connected to both the base (22) of the BDU and the upper cover (21) of the BDU; and
the protective plate (23) is arranged with an elastic abutting arm (231), the elastic abutting arm (231) is configured to elastically abut against the base (22) of the BDU.

13. A battery disconnect unit, BDU, comprising the BDU case as claimed in any one of claims 5-12, wherein an electrical assembly is received in a receiving cavity (221) of the BDU case; and
the electrical assembly is arranged with a plurality of voltage sampling points, and an insertion sheet (103) is arranged at each of the plurality of voltage sampling points, and the insertion sheet (103) is connected to a bus bar (104) in a rivet-pressing manner.

14. A battery pack case, comprising: a body (10) and the BDU as claimed in claim 13;
wherein the body (10) defining a mounting cavity (101);
the BDU is mounted in the mounting cavity (101); and
the BDU has a BDU output pole (201), the battery pack case has a pack case connector (102), the BDU output pole (201) is threaded to the pack case connector (102).

## Patentansprüche

1. Eine Schutzabdeckung, umfassend:
ein Wasserblockierelement (11), wobei das Wasserblockierelement (11) eine Wasserblockierplatte (111) umfasst, wobei die Wasserblockierplatte (111) mit einem Wasserblockierflansch (1111) versehen ist, wobei der Wasserblockierflansch (1111) dazu ausgebildet ist, mit einer oberen Abdeckung (21) einer Batterietrenneinheit, BDU, verrastet zu werden, sodass die Wasserblockierplatte (111) eine obere Öffnung einer ersten Aussparung (211) der oberen Abdeckung (21) der BDU abdichten kann;
ein Seitenschutzteil (12), das an einer Seite des Wasserblockierelements (11) angeordnet und dazu ausgebildet ist, mit einer Basis (22) der BDU verrastet zu werden und einen Teil einer seitlichen Öffnung der ersten Aussparung (211) abzudecken;
wobei die Schutzabdeckung **dadurch gekennzeichnet ist, dass**
das Wasserblockierelement (11) ferner einen Stützkörper (113) umfasst, die Wasserblockierplatte (111) auf dem Stützkörper (113) angeordnet ist, der Wasserblockierflansch (1111) einen Flanschkörper (11111) und einen Flanschrand (11112) umfasst, der Flanschkörper (11111) aus dem Stützkörper (113) hervorsteht, eine dem Stützkörper (113) zugewandte Oberfläche des Flanschrandes (11112) gekrümmt und konkav ist; eine Kante der Wasserblockierplatte (111) aus einer Seite des Stützkörpers (113) hervorsteht, um den Wasserblockierflansch (1111) zu bilden.

2. Die Schutzabdeckung nach Anspruch 1, wobei zwischen dem Flanschrand (11112) und dem Flanschkörper (11111) ein Winkel gebildet ist und der Flanschrand (11112) dazu ausgebildet ist, an der oberen Abdeckung (21) der BDU anzuliegen.

3. Die Schutzabdeckung nach Anspruch 1, wobei der Stützkörper (113) einen ersten Eingriffsschlitz (112) definiert oder mit einer Eingriffsrippe (213) versehen ist, wobei der erste Eingriffsschlitz (112) oder die Eingriffsrippe (213) dazu ausgebildet ist, mit der oberen Abdeckung (21) der BDU verrastet zu werden; und
der Stützkörper (113) mit einer Begrenzungs- und Anlagefläche (1131) versehen ist, wobei die Begrenzungs- und Anlagefläche (1131) dazu ausgebildet ist, an der oberen Abdeckung (21) der BDU anzuliegen, um eine Bewegung des Stützkörpers (113) in einer ersten Richtung zu begrenzen.

4. Die Schutzabdeckung nach Anspruch 1, wobei das Seitenschutzteil (12) mit einer elastischen Eingriffslasche (121) versehen ist, wobei die elastische Eingriffslasche (121) einen zweiten Eingriffsschlitz (1211) definiert; und
die elastische Eingriffslasche (121) ferner mit einer Entriegelungsdruckstelle (1212) versehen ist, wobei die Entriegelungsdruckstelle (1212) dazu ausgebildet ist, zu ermöglichen, dass sich die elastische Eingriffslasche (121) bei Druckausübung relativ zu dem Seitenschutzteil (12) dreht.

5. Ein Gehäuse einer Batterietrenneinheit, BDU, umfassend: die Basis (22), die obere Abdeckung (21) und die Schutzabdeckung nach einem der Ansprüche 1 bis 4;
wobei die Basis (22) der BDU einen Aufnahmehohlraum (221) definiert;
die obere Abdeckung (21) der BDU dazu ausgebildet ist, eine Öffnung des Aufnahmehohlraums (221) abzudecken, wobei die obere Abdeckung (21) der BDU mit der ersten Aussparung (211) versehen ist, die mit dem Aufnahmehohlraum (221) in Verbindung steht und einen Teil der Öffnung des Aufnahmehohlraums (221) freilegt; und
das Wasserblockierelement (11) der Schutzabdeckung an der ersten Aussparung (211) angeordnet ist, wobei der Wasserblockierflansch (1111) dazu ausgebildet ist, mit der oberen Abdeckung (21) der BDU verrastet zu werden, und das Seitenschutzteil (12) der Schutzabdeckung dazu ausgebildet ist, mit der Basis (22) der BDU verrastet zu werden.

6. Das BDU-Gehäuse nach Anspruch 5, wobei in der oberen Abdeckung (21) der BDU entlang des Umfangs der ersten Aussparung (211) eine Fluidführungsnut (212) definiert ist, wobei der Wasserblockierflansch (1111) dazu ausgebildet ist, in der Fluidführungsnut (212) verrastet zu werden, und zwischen dem Wasserblockierflansch (1111) und einer von der ersten Aussparung (211) abgewandten Wand der Fluidführungsnut (212) ein Fluidführungsspalt (219) definiert ist.

7. Das BDU-Gehäuse nach Anspruch 6, wobei entweder der Stützkörper (113) der Schutzabdeckung oder die obere Abdeckung (21) der BDU einen ersten Eingriffsschlitz (112) definiert und das jeweils andere von dem Stützkörper (113) der Schutzabdeckung und der oberen Abdeckung (21) der BDU mit einer Eingriffsrippe (213) versehen ist, die mit dem ersten Eingriffsschlitz (112) verrastet ist;
wobei die Verrastung zwischen dem ersten Eingriffsschlitz (112) und der Eingriffsrippe (213) dazu ausgebildet ist, eine Bewegung der Schutzabdeckung in einer dritten Richtung und in einer vierten Richtung zu begrenzen, wobei die dritte Richtung der vierten Richtung entgegengesetzt ist.

8. Das BDU-Gehäuse nach Anspruch 7, wobei der erste Eingriffsschlitz (112) an jeder von zwei Seiten des Stützkörpers (113) entlang einer fünften Richtung oder einer sechsten Richtung definiert ist, die Eingriffsrippe (213) an der oberen Abdeckung (21) der BDU dem ersten Eingriffsschlitz (112) jeweils einzeln zugeordnet ist, wobei die Verrastung zwischen der Eingriffsrippe (213) und dem ersten Eingriffsschlitz (112) dazu ausgebildet ist, eine Bewegung der Schutzabdeckung in der fünften Richtung und in der sechsten Richtung zu begrenzen, wobei die fünfte Richtung der sechsten Richtung entgegengesetzt ist und sowohl die fünfte Richtung als auch die sechste Richtung senkrecht zu der dritten Richtung oder der vierten Richtung ist.

9. Das BDU-Gehäuse nach Anspruch 8, wobei der Stützkörper (113) mit einer Begrenzungs- und Anlagefläche (1131) versehen ist, die obere Abdeckung (21) der BDU mit einer Anlagerippe (214) versehen ist, die Anlagerippe (214) senkrecht zu der Eingriffsrippe (213) ist, wobei die Begrenzungs- und Anlagefläche (1131) an der Anlagerippe (214) anliegt, um eine Bewegung der Schutzabdeckung in der ersten Richtung zu begrenzen.

10. Das BDU-Gehäuse nach Anspruch 5, wobei das Seitenschutzteil (12) mit einer elastischen Eingriffslasche (121) versehen ist; wobei entweder die elastische Eingriffslasche (121) oder die Basis (22) der BDU einen zweiten Eingriffsschlitz (1211) definiert und das jeweils andere von der elastischen Eingriffslasche (121) und der Basis (22) der BDU mit einem Eingriffsblock (222) der BDU-Basis versehen ist; wobei der zweite Eingriffsschlitz (1211) mit dem Eingriffsblock (222) der BDU-Basis verrastet ist, um eine Bewegung der Schutzabdeckung in der zweiten Richtung zu begrenzen.

11. Das BDU-Gehäuse nach Anspruch 5, wobei an einer Außenseite der Basis (22) der BDU ein Befestigungselement (223) angeordnet ist, wobei das Befestigungselement (223) dazu ausgebildet ist, einen Interlock-Steckverbinder eines Hochspannungskabelbaums zu befestigen, der außerhalb der Basis (22) angeordnet ist.

12. Das BDU-Gehäuse nach einem der Ansprüche 5 bis 11, ferner umfassend eine Schutzplatte (23), wobei die obere Abdeckung (21) der BDU eine zweite Aussparung (215) definiert, die Schutzplatte (23) innerhalb der zweiten Aussparung (215) angeordnet ist, und die Schutzplatte (23) sowohl mit der Basis (22) der BDU als auch mit der oberen Abdeckung (21) der BDU verbunden ist; und
die Schutzplatte (23) mit einem elastischen Anlagearm (231) versehen ist, wobei der elastische Anlagearm (231) dazu ausgebildet ist, elastisch an der Basis (22) der BDU anzuliegen.

13. Eine Batterietrenneinheit, BDU, umfassend das BDU-Gehäuse nach einem der Ansprüche 5 bis 12, wobei eine elektrische Baugruppe in einem Aufnahmehohlraum (221) des BDU-Gehäuses aufgenommen ist; und
die elektrische Baugruppe mit einer Vielzahl von Spannungserfassungsstellen versehen ist, wobei an jeder der Vielzahl von Spannungserfassungsstellen ein Einsteckblech (103) angeordnet ist und das Einsteckblech (103) durch Nietpressen mit einer Sammelschiene (104) verbunden ist.

14. Ein Batteriepackgehäuse, umfassend: einen Körper (10) und die BDU nach Anspruch 13;
wobei der Körper (10) einen Montagehohlraum (101) definiert; die BDU in dem Montagehohlraum (101) montiert ist; und
die BDU einen BDU-Ausgangspol (201) aufweist, das Batteriepackgehäuse einen Batteriepackgehäuseverbinder (102) aufweist und der BDU-Ausgangspol (201) mit dem Batteriepackgehäuseverbinder (102) verschraubt ist.

## Revendications

1. Un couvercle de protection, comprenant :
un élément d'étanchéité à l'eau (11), dans lequel l'élément d'étanchéité à l'eau (11) comprend une plaque d'étanchéité à l'eau (111), la plaque d'étanchéité à l'eau (111) étant pourvue d'une bride d'étanchéité à l'eau (1111), la bride d'étanchéité à l'eau (1111) étant configurée pour être emboîtée par encliquetage avec un couvercle supérieur (21) d'une unité de déconnexion de batterie, BDU, de manière à permettre à la plaque d'étanchéité à l'eau (111) d'assurer l'étanchéité d'une ouverture supérieure d'une première encoche (211) du couvercle supérieur (21) de la BDU ;
un élément de protection latéral (12), disposé sur un côté de l'élément d'étanchéité à l'eau (11) et configuré pour être emboîté par encliquetage avec une base (22) de la BDU et pour recouvrir une partie d'une ouverture latérale de la première encoche (211) ;
dans lequel le couvercle de protection est **caractérisé en ce que**
l'élément d'étanchéité à l'eau (11) comprend en outre un corps de support (113), la plaque d'étanchéité à l'eau (111) étant disposée sur le corps de support (113), la bride d'étanchéité à l'eau (1111) comprenant un corps de bride (11111) et un bord de bride (11112), le corps de bride (11111) faisant saillie hors du corps de support (113), une surface du bord de bride (11112) faisant face au corps de support (113) étant incurvée et concave ; un bord de la plaque d'étanchéité à l'eau (111) faisant saillie hors d'un côté du corps de support (113) pour former la bride d'étanchéité à l'eau (1111).

2. Le couvercle de protection selon la revendication 1, dans lequel un angle est formé entre le bord de bride (11112) et le corps de bride (11111), le bord de bride (11112) étant configuré pour venir en appui contre le couvercle supérieur (21) de la BDU.

3. Le couvercle de protection selon la revendication 1, dans lequel le corps de support (113) définit une première rainure d'engagement (112) ou est pourvu d'une nervure d'engagement (213), et la première rainure d'engagement (112) ou la nervure d'engagement (213) étant configurée pour être emboîtée par encliquetage avec le couvercle supérieur (21) de la BDU ; et
le corps de support (113) étant pourvu d'une surface de limitation et d'appui (1131), la surface de limitation et d'appui (1131) étant configurée pour venir en appui contre le couvercle supérieur (21) de la BDU afin de limiter un déplacement du corps de support (113) dans une première direction.

4. Le couvercle de protection selon la revendication 1, dans lequel l'élément de protection latéral (12) est pourvu d'une languette d'engagement élastique (121), la languette d'engagement élastique (121) définissant une deuxième rainure d'engagement (1211) ; et
la languette d'engagement élastique (121) étant en outre pourvue d'une zone de pression de déverrouillage (1212), la zone de pression de déverrouillage (1212) étant configurée pour permettre, lorsqu'une pression est exercée sur celle-ci, à la languette d'engagement élastique (121) de tourner par rapport à l'élément de protection latéral (12).

5. Un boîtier d'une unité de déconnexion de batterie, BDU, comprenant :
la base (22), le couvercle supérieur (21) et le couvercle de protection selon l'une quelconque des revendications 1 à 4 ;
dans lequel la base (22) de la BDU définit une cavité de réception (221) ;
le couvercle supérieur (21) de la BDU étant configuré pour recouvrir une ouverture de la cavité de réception (221), le couvercle supérieur (21) de la BDU étant pourvu de la première encoche (211) communiquant avec la cavité de réception (221) et exposant une partie de l'ouverture de la cavité de réception (221) ; et
l'élément d'étanchéité à l'eau (11) du couvercle de protection étant disposé au niveau de la première encoche (211), la bride d'étanchéité à l'eau (1111) étant configurée pour être emboîtée par encliquetage avec le couvercle supérieur (21) de la BDU, et l'élément de protection latéral (12) du couvercle de protection étant configuré pour être emboîté par encliquetage avec la base (22) de la BDU.

6. Le boîtier de BDU selon la revendication 5, dans lequel une rainure de guidage de fluide (212) est définie dans le couvercle supérieur (21) de la BDU le long de la circonférence de la première encoche (211), la bride d'étanchéité à l'eau (1111) étant configurée pour être emboîtée par encliquetage dans la rainure de guidage de fluide (212), et un espace de guidage de fluide (219) étant défini entre la bride d'étanchéité à l'eau (1111) et une paroi de la rainure de guidage de fluide (212) éloignée de la première encoche (211).

7. Le boîtier de BDU selon la revendication 6, dans lequel l'un du corps de support (113) du couvercle de protection et du couvercle supérieur (21) de la BDU définit une première rainure d'engagement (112), et l'autre du corps de support (113) du couvercle de protection et du couvercle supérieur (21) de la BDU est pourvu d'une nervure d'engagement (213) qui est emboîtée par encliquetage avec la première rainure d'engagement (112) ;
l'emboîtement par encliquetage entre la première rainure d'engagement (112) et la nervure d'engagement (213) étant configuré pour limiter un déplacement du couvercle de protection dans une troisième direction et dans une quatrième direction, la troisième direction étant opposée à la quatrième direction.

8. Le boîtier de BDU selon la revendication 7, dans lequel la première rainure d'engagement (112) est définie sur chacun de deux côtés du corps de support (113) selon une cinquième direction ou une sixième direction, la nervure d'engagement (213) sur le couvercle supérieur (21) de la BDU correspondant individuellement à la première rainure d'engagement (112), l'emboîtement par encliquetage entre la nervure d'engagement (213) et la première rainure d'engagement (112) étant configuré pour limiter un déplacement du couvercle de protection dans la cinquième direction et dans la sixième direction, la cinquième direction étant opposée à la sixième direction, et chacune de la cinquième direction et de la sixième direction étant perpendiculaire à la troisième direction ou à la quatrième direction.

9. Le boîtier de BDU selon la revendication 8, dans lequel le corps de support (113) est pourvu d'une surface de limitation et d'appui (1131), le couvercle supérieur (21) de la BDU est pourvu d'une nervure d'appui (214), la nervure d'appui (214) étant perpendiculaire à la nervure d'engagement (213), la surface de limitation et d'appui (1131) venant en appui contre la nervure d'appui (214) pour limiter un déplacement du couvercle de protection dans la première direction.

10. Le boîtier de BDU selon la revendication 5, dans lequel l'élément de protection latéral (12) est pourvu d'une languette d'engagement élastique (121) ; l'un de la languette d'engagement élastique (121) et de la base (22) de la BDU définit une deuxième rainure d'engagement (1211), et l'autre de la languette d'engagement élastique (121) et de la base (22) de la BDU est pourvu d'un bloc d'engagement de la base de la BDU (222) ; la deuxième rainure d'engagement (1211) étant emboîtée par encliquetage avec le bloc d'engagement de la base de la BDU (222) pour limiter un déplacement du couvercle de protection dans la deuxième direction.

11. Le boîtier de BDU selon la revendication 5, dans lequel un élément de fixation (223) est disposé sur un côté extérieur de la base (22) de la BDU, l'élément de fixation (223) étant configuré pour fixer un connecteur d'interverrouillage du faisceau de câbles haute tension disposé à l'extérieur de la base (22).

12. Le boîtier de BDU selon l'une quelconque des revendications 5 à 11, comprenant en outre une plaque de protection (23), dans lequel le couvercle supérieur (21) de la BDU définit une deuxième encoche (215), la plaque de protection (23) étant disposée à l'intérieur de la deuxième encoche (215), la plaque de protection (23) étant reliée à la fois à la base (22) de la BDU et au couvercle supérieur (21) de la BDU ; et
la plaque de protection (23) étant pourvue d'un bras d'appui élastique (231), le bras d'appui élastique (231) étant configuré pour venir élastiquement en appui contre la base (22) de la BDU.

13. Une unité de déconnexion de batterie, BDU, comprenant le boîtier de BDU selon l'une quelconque des revendications 5 à 12, dans laquelle un ensemble électrique est reçu dans une cavité de réception (221) du boîtier de BDU ; et
l'ensemble électrique étant pourvu d'une pluralité de points de détection de tension, une plaque d'insertion (103) étant disposée au niveau de chacun de la pluralité de points de détection de tension, et la plaque d'insertion (103) étant reliée à une barre omnibus (104) par rivetage-pressage.

14. Un boîtier de bloc-batterie, comprenant : un corps (10) et la BDU selon la revendication 13 ;
dans lequel le corps (10) définissant une cavité de montage (101) ; la BDU étant montée dans la cavité de montage (101) ; et
la BDU comportant une borne de sortie de BDU (201), le boîtier de bloc-batterie comportant un connecteur de boîtier de bloc-batterie (102), la borne de sortie de BDU (201) étant vissée au connecteur de boîtier de bloc-batterie (102).
